# EUROPEAN PATENT APPLICATION

(11) **EP 3 627 527 A1**
(43) Date of publication of application: **25.03.2020**
(21) Application number: 18195678.0
(22) Date of filing: 20.09.2018
(51) Int. Cl.: H01G 9/20

(54) **PHOTOVOLTAIC DEVICE FOR POWERING AN EXTERNAL DEVICE AND A METHOD FOR PRODUCING THE PHOTOVOLTAIC DEVICE**

(71) Applicant: Exeger Operations AB, 102 04 Stockholm (SE)
(72) Inventor: Lindström, Henrik, SE-184 63 Åkersberga (SE); Fili, Giovanni, SE-182 56 Danderyd (SE); Nissfolk, Jarl, SE-182 45 Enebyberg (SE); Sundqvist, Daniel, 168 59 Bromma (SE)
(74) Representative: Swea IP Law AB

(57) **Abstract**

The present invention relates to a photovoltaic device (1) for powering an external device, and a method for producing the photovoltaic device. The device comprises a solar cell unit (2) including comprising a porous light-absorbing layer (3) arranged at a top side (2a) of the solar cell unit, a porous first conducting layer (4) for extracting photo-generated electrons from the light-absorbing layer, wherein the light-absorbing layer is arranged on top of the first conducting layer, a porous substrate (5) made of an insulating material, wherein the first conducting layer is formed on one side of the porous substrate, a second conducting layer (6) arranged at a bottom side (2b) of the solar cell unit, wherein the second conducting layer is formed on an opposite side of the porous substrate, and a conducting medium for transferring charges between the second conducting layer (6) and the light-absorbing layer (3). The photovoltaic device further comprises first conductor (7) in electrical contact with the first conducting layer, a second conductor (8) in electrical contact with the second conducting layer (6), and an encapsulation (9) encapsulating the solar cell unit, and comprising a top sheet (9a) covering the top side (2a) of the solar cell unit and a bottom sheet (9b) covering the bottom side (2b) of the solar cell unit, wherein the first conductor (7) is arranged between the encapsulation (9) and the solar cell unit (2) at any of the top side (2a) and bottom side (2b) of the solar cell unit (2), the second conductor (8) is arranged between the encapsulation (9) and the solar cell unit (2) at the bottom side (2b) of the solar cell unit (2).

## Description

### Technical field

The present invention relates to a photovoltaic device for powering an external device. The invention also relates to a method for producing the photovoltaic device.

### Background

Photovoltaic devices provide conversion of light into electricity using semiconducting materials that exhibit a photovoltaic effect. A typical photovoltaic device comprises a number of solar cells. Solar cells are well-known devices for converting solar radiation to electrical energy. A solar cell has a front side that faces the sun during normal operation to collect solar radiation and a backside opposite the front side.

On the backside of a traditional solar cell, a metal plate collects excess charge-carriers from a base, and on the front side, metal grids and metal wires collect excess charge-carriers from an emitter. Thus, conventional silicon solar cells have a front-side contacted emitter. A problem with using current collecting grids and wires on the front side of the solar cell is that there is a trade-off between good current collection and light harvesting. By increasing the size of the metal wires, the conduction is increased and the current collection is improved. However, by increasing the size of the metal grids and wires more of the sun harvesting area is shaded, leading to a reduced efficiency of the solar cell.

Back-contact solar cells achieve higher efficiency by moving the front-side contacted emitter to the rear side of the solar cell. The higher efficiency results from the reduced shading on the front side of the solar cell. There exist several configurations of back-contact solar cells. In an all back-contact solar cell, all metal contacts and corresponding emitters are formed on the backside of the solar cell. An external electrical circuit, e.g. a load, may be connected to the metal contacts to be powered by the solar cell.

US 2014166095 A1 shows an example of a back-contact solar cell having a hybrid emitter design. The solar cell has a thin dielectric layer formed on a backside surface of a single crystalline silicon substrate. One emitter of the solar cell is made of doped polycrystalline silicon that is formed on the thin dielectric layer. The other emitter of the solar cell is formed in the single crystalline silicon substrate and is made of doped single crystalline silicon. The solar cell includes contact holes through the stack of material to allow metal contacts to connect to corresponding emitters. The metal contacts are all formed on the backside of the solar cell. For example, the metal contact may comprise aluminum formed on an emitter, a diffusion barrier comprising titanium-tungsten formed on the aluminum, and a seed layer comprising copper formed on the diffusion barrier. Generally, there is a large number of emitters in the solar cell, and each is connected to a corresponding contact hole. This results in a large number of holes. It is time-consuming to drill the holes through the stack of material and to fill them with the metal layer, the diffusion barrier and the seed layer. Thus, a disadvantage with this solar cell is that the production of the contacts is complex and costly.

WO 2013/149787 A1 discloses another example of a back-contact solar cell. The solar cell includes a porous insulating layer, a working electrode including a porous conducting metal layer formed on top of the porous insulating layer, and a light-absorbing layer containing an adsorbed dye arranged on top of the porous conducting metal layer to face the sun. The light-absorbing layer comprises TiO₂ metal oxide particles dyed by light-adsorbing dye molecules on the surface of the TiO₂ particles. The dye-sensitized solar cell further includes a counter electrode including a conducting layer disposed on an opposite side of the porous insulating layer. An electrolyte is filled between the working electrode and the counter electrode. An advantage of this solar cell is that it is easy and fast to manufacture, and accordingly it is cost-effective to produce. This document is silent about how the contacts should be arranged and how they can be produced.

WO2015/117795 discloses a dye-sensitized solar cell comprising a porous isolating substrate, a porous first conducting layer printed on one side of the porous isolating substrate and a porous second conducting layer printed on the other side of the porous isolating substrate. A light-absorbing layer comprising light-absorbing dye molecules is deposited on the first conducting layer. For example, the thickness of the first and second porous conductive layer is 20 µm, the thickness of the porous conductive powder layer is 16 µm, and the thickness of the light-absorbing layer is 60 µm. Each of the porous layers comprise a printed pattern including non-transparent and transparent portions arranged so that they form continuous transparent pathways through the solar cell. The solar cell comprises a first connection element electrically connected to the first conductive layer for connecting the first conductive layer to an external electric circuit, and a second connection element electrically connected to the second conductive layer for connecting the second conductive layer to the external electric circuit. For example, the connection elements are busbars. The connection elements may extend along the entire side of the layers. The non-transparent portions are in electric contact with the first connection element, and the non-transparent portions are in electric contact with the second connection element. The connection elements shown in the figures are disposed at a short side of the solar cell. A problem is that it is difficult to connect the connection elements to the first and second conducting layers, since the solar cell is very thin, and the first and second conducting layers are very thin, only approximately 20 µm.

### Summary

It is an aim of the present invention to at least partly overcome the above problems, and to provide an improved photovoltaic device for powering an external device.

This aim is achieved by a photovoltaic device as defined in claim 1 and the method as defined in claim 15.

The photovoltaic device comprises a solar cell unit including a working electrode comprising a porous light-absorbing layer arranged at a top side of the solar cell unit, a porous first conducting layer for extracting photo-generated electrons from the light-absorbing layer, wherein the light-absorbing layer is arranged on top of the first conducting layer, a porous substrate made of an insulating material, wherein the first conducting layer is formed on one side of the porous substrate, a counter electrode including a second conducting layer arranged at a bottom side of the solar cell unit, wherein the second conducting layer is formed on an opposite side of the porous substrate, and a conducting medium for transferring charges between the second conducting layer and the light-absorbing layer. The photovoltaic device further comprises at least one first conductor in electrical contact with the first conducting layer, at least one second conductor in electrical contact with the second conducting layer, and an encapsulation enclosing the solar cell unit, and comprising an at least partly transparent top sheet covering the top side of the solar cell unit and a bottom sheet covering the bottom side of the solar cell unit. Further, the at least one first conductor is arranged between the encapsulation and the solar cell unit at any of the topside and bottom side of the solar cell unit, the at least one second conductor is arranged between the encapsulation and the solar cell unit at the bottom side of the solar cell unit.

The first conductor works as a current collector and collects currents from the first conducting layer. The second conductor works as a current distributor and distributes currents to the second conducting layer.

To place the first conductors on the front or back surface is a much simpler process than placing them on the edges, as done in the prior art where the connections are disposed at a short side of the solar cell. As discussed in the background, the short side is very thin and the precision required for placing the first conductors there is extremely high and imposes very high accuracy of the producing machines.

By placing the first and second conductors between the encapsulation and solar cell unit, the encapsulation holds the first and second conductor in place and protects them.

With encapsulation is meant a cover sealingly enclosing the solar cell unit to prevent dust and damp to enter the solar cell unit and to prevent liquid and air from the inside to leak out from the device.

According to some aspects, the encapsulation comprises a plurality of penetrations in connection to the first and second conductors for connecting the photovoltaic device to the external device. In other words, there are penetrations in the encapsulation for accessing the power produced by the photovoltaic device. Some kind of wiring will be going through the penetrations. For example, the first and second conductors may extend out of the encapsulation through the penetrations to connect to wiring for powering the external device. Alternatively, wires from the outside of the encapsulation are going through the penetrations and electrically connect to the first and second conductors. The penetrations are tightly fit around the wiring passing through the encapsulation such that no gas or liquid can pass through penetrations. For example, the penetrations are openings in the encapsulation tightly fit around wiring passing through the encapsulation.

If the first conductor is arranged along an edge of the top side of the solar cell unit or at the bottom side of the solar cell unit it is easy to hide, and will not be visible for a user.

A solar cell unit according to above can be made big and cut in any shape. The first conductor can be placed were ever the system designer wants; on the backside so that it is not visible from the front or along an edge on the frontside.

According to some aspects, the first and second conductors are elongated and arranged with their longitudinal axes in parallel with the first and second conducting layers.

According to some aspects, the at least one second conductor extends from side to side of the second conducting layer along at least 50% of the length, preferably along at least 70% of the length, and most preferably along at least 90% of the length. The efficiency of the solar cell unit is increased with good contact between the second conducting layer and the second conductor. Depending on the size of the solar cell unit, one or more second conductors may be used. For a larger solar cell unit, a longer second conductor may be used. Several second conductors may also be used. The second conductor needs to provide enough electrons to the second conducting layer so that the solar cell unit is constantly refilled for producing more power.

According to some aspects, the at least one first conductor extends from side to side of the solar cell unit along at least 50% of the length, preferably along at least 70% of the length, and most preferably along at least 90% of the length. The length also here, depends on the size and shape of the solar cell unit. A first conductor that covers more of the length gives, in general, a more efficient solar cell unit if it does not cover light receiving surface but the length also depends on other factors, such as design and production technique.

According to some aspects, each of the second conductor and the first conductor extend from side to side of the solar cell unit along at least 50% of the length, preferably along at least 70% of the length, and most preferably along at least 90% of the length.

According to some aspects, the second conducting layer has a bottom surface facing the bottom sheet, the second conductor is in mechanical and electrical contact with an elongated part of the bottom surface. In other words, the contacting surface between the second conductor and the bottom surface is an elongated surface which provides good electrical contact between them. The second conductor abut the second conducting layer. According to some aspects, the encapsulation holds the second conductor in place.

According to some aspects, the first and second conducting layers comprise titanium or an alloy thereof. Although titanium has relatively low electrical conductivity for a metal, it is advantageous to use titanium in the first and second conducting layers since it is non-corrosive and can resist high temperatures in air without oxidizing significantly, which is advantageous during manufacturing of the solar cell unit.

According to some aspects, the second conducting layer comprises titanium or an alloy thereof, and the second conductor comprise titanium or an alloy thereof. This is advantageous when the second conductor is arranged in physical contact with the second conducting layer to provide a good electrical connection between them. Due to the high temperatures during manufacturing of the solar cell unit there is a thin oxide layer on the titanium or titanium alloy of the conducting layers. It has been found that it is difficult to provide electrical contact between a conductor of a traditional conducting metal, such as copper or silver, and the first and second conducting layers due to the oxide layer on the titanium. Surprisingly, it has been discovered that a conductor comprising titanium provides good electrical connection between the conductor and the conducing layers of the solar cell unit despite the oxide layer on the titanium. Thus, it is advantageous to use titanium as conducting material, even though titanium has relatively low electrical conductivity.

According to some aspects, the first conducting layer comprises titanium or an alloy thereof, and the first conductor comprise titanium or an alloy thereof. This is advantageous when the first conductor is arranged in physical contact with the first conducting layer to provide a good electrical connection between the them.

According to some aspects, the second conductor comprise an elongated conducting foil. A foil provides a wide contacting area and has a width which increases the throughput of electrons. This is advantageous when the second conductor is made of a material with relatively low electrical conductivity, such as titan or an alloy thereof.

According to some aspects, the first conductor comprises an elongated conducting foil. This is advantageous when the first conductor is made of a material with relatively low electrical conductivity, such as titan or an alloy thereof.

According to some aspects, the conducting foil has a width of at least 3 mm. This is advantageous when the conductor is made of a material with relatively low electrical conductivity, such as titan or an alloy thereof. The width is both for large contacting area, for increased flow of electrons and for easiness to handle. A thinner foil is harder to handle in the production process.

According to some aspects, the first conductor is arranged between the first conducting layer and the top sheet at the top side of the solar cell unit, the first conductor extends along an edge of an upper surface of the first conducting layer, and the first conductor is in mechanical and electrical contact with an elongated part of the first conducting layer. The top side is facing the light, and is visible to the users. If the first conductor is arranged along an edge of the top side of the solar cell unit it is easy to hide, and will not be visible for the user. Thus, the solar cell unit has a uniform look without any grid patterns or the like. The first conductor abut the first conducting layer, and accordingly is in physical contact with the first conducting layer. In this way, the first conductor is easy to arrange on the solar cell unit since it can be placed on a flat, large surface, and the solar cell unit can keep its uniform look without lines going through the top surface. The first conductor can then be covered by, for example plastic, so that it is not visible to the onlooker. Since the first conductor is placed along the edge, it is easily covered without impacting the efficiency of the photovoltaic device or its overall appearance.

According to one aspect, the second conducting layer and the porous substrate are continuously extending through the entire solar cell unit.

According to one aspect, the first conductor and the second conductor are disposed on the bottom side of the solar cell unit. Thus, there will then be no visible wiring on the upper side of the photovoltaic charger. The first and second conductors can easily be hidden by disposing the photovoltaic charger on a surface of the device, or a cover of the device. This means that when the photovoltaic charger is placed on a surface of the device, the first conductor is not visible for a user. This makes it possible to integrate the photovoltaic charger in the device, or a cover of the device, so that a user will not even notice that there is a photovoltaic charger integrated in the device. Substantially a whole surface of the device can be covered by the photovoltaic charger. Thus, the whole surface of the device or cover of the device can be used to produce power without affecting the visible appearance of the device.

According to some aspects, the at least one first conductor is arranged between the porous substrate and the bottom sheet at the bottom side of the solar cell unit, the at least one first conductor is electrically insulated from the second conducting layer, and the at least one first conductor is in mechanical contact with an elongated part of the porous substrate. Thus, the at least one first conductor is arranged on the backside of the solar cell unit such that it is not visible from the topside. Thus, there will then be no visible wiring on the upper side of the photovoltaic device. The first conductor and second conductor can thus easily be hidden. This makes it possible to integrate the photovoltaic device in an external device, or a cover of the external device, so that a user will not even notice that there is a photovoltaic device integrated in the device. Substantially a whole surface of the external device can be covered by the photovoltaic device. Thus, the whole surface of the external device or cover of the external device can be used to produce power without affecting the visible appearance of the external device.

According to some aspects, the second conducting layer ends at a distance from the first conductor so that an insulating gap is formed between the first conductor and the second conducting layer. In other words, the second conducting layer does not cover the entire porous substrate and in the places where there is no second conducting layer on the porous substrate, there is arranged at least one first conductor with a distance between the second conducting layer and the first conductor. In other words, the at least one first conductor does not cover the entire porous substrate at the location where the second conducting layer does not cover the porous substrate.

According to some aspects, the porous substrate comprises conducting material disposed between the first conductor and the first conducting layer. A part of the porous substrate disposed between the first conductor and the first conducting layer comprises a conducting material to provide electrical contact between the first conductor and the first conducting layer. As previously discussed, the first conductor is in electrical contact with the first conducting layer and this may be done by arranging conducting material in the porous substrate at the location of the at least one first conductor. For example, a part of the porous substrate is provided with one or more holes filled with a conducting material. The conducting material is, for example, metal particles.

According to some aspects, a part of the porous substrate disposed between the first conductor and the first conducting layer comprises holes filled with a conducting material, such as conducting particles.

According to some aspects, the conducting material comprises conducting particles accommodated in pores of the porous substrate so that they form a conducting path through the porous substrate between the first conductor and the first conducting layer. This can easily be achieved by infiltration of conducting particles in the part the porous substrate disposed between the first conductor and the first conducting layer. This is advantageous since it is easy to manufacture.

According to some aspects, the first conductor and second conductor comprise an elongated wire. At least one of the first and/or the second conductors is a wire. Alternatively, each of the first and second conductors is an elongated wire. A wire may be a cheap and durable option. Further, a wire can be made very thin and thus not disturb the appearance of the upper surface of the photovoltaic device if it is mounted on the upper side of the solar cell unit.

According to some aspects, the wire has an elongated kernel of a material with high electrical conductivity, for example silver, and the kernel has a cover of titanium or an alloy thereof. Such a wire will provide good electrical connection to conducting layers comprising titanium as well as have high electrical conductivity.

According to an embodiment of the invention, a method for producing a photovoltaic device for powering an external device is provided. The method comprises providing a solar cell unit including a working electrode comprising a porous light-absorbing layer arranged at a top side of the solar cell unit, a porous first conducting layer for extracting photo-generated electrons from the light-absorbing layer, wherein the light-absorbing layer is arranged on top of the first conducting layer, a porous substrate made of an insulating material, wherein the first conducting layer is formed on one side of the porous substrate, a counter electrode including a second conducting layer arranged at a bottom side of the solar cell unit, wherein the second conducting layer is formed on an opposite side of the porous substrate, and a conducting medium for transferring charges between the second conducting layer and the light-absorbing layer. The method further comprises attaching at least one first conductor to an at least partly transparent top sheet or a bottom sheet, attaching at least one second conductor to the bottom sheet and arranging the top sheet to cover the top side of the solar cell unit and the bottom sheet to cover the bottom side of the solar cell unit such that the top sheet and the bottom sheet forms an encapsulation enclosing the solar cell unit. The at least one first conductor is attached to the top sheet or the bottom sheet such that it is in electrical contact with the first conducting layer when the encapsulation is formed and wherein the at least one second conductor is attached to the bottom sheet such that it is in electrical contact with the second conducting layer when the encapsulation is formed. Thus, the photovoltaic device according to above is produced. The method provides a way to produce the device where there is no need for any adhesive material between the first and second conductors and the conducting layers. It is also easy to handle the thin conductors when they are attached to the cover surfaces.

According to one aspect, the encapsulation is made of a transparent plastic. This feature contributes to provide a flexible, twistable, and impact resistant photovoltaic device.

### Brief description of the drawings

The invention will now be explained more closely by the description of different embodiments of the invention and with reference to the appended figures.
Figs. 1a and 1b show illustrations from above of two examples of photovoltaic devices, one with a first conductor on a bottom side of a solar cell unit and one with a first conductor on a top side of the solar cell unit.
Figs. 2a and 2b show the underside of the photovoltaic devices shown in figures 1a and 1b.
Fig. 3 shows an example of a cross section of a solar cell unit in an encapsulation without first conductors.
Fig. 4 shows an example of a cross section of a solar cell unit in an encapsulation and with a first conductor on the top side of the solar cell unit and a second conductor on the bottom side of the solar cell unit.
Fig. 5a shows one example of a cross section of a solar cell unit in an encapsulation and with a first conductor and a second conductor on the bottom side of the solar cell unit.
Fig. 5b shows another example of a cross section of a solar cell unit in an encapsulation and with a first conductor and a second conductor on the bottom side of the solar cell unit.
Fig. 6 shows a block diagram illustrating a method to produce a photovoltaic device according to some aspects of the disclosure.

### Detailed description

Aspects of the present disclosure will be described more fully hereinafter with reference to the accompanying drawings. The photovoltaic device and the method disclosed herein can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the invention. As used herein, the singular forms "a", "an" and "the" are intended to include the plural forms as well, unless the context clearly indicates otherwise.

Unless otherwise defined, all terms used herein have the same meaning as commonly understood by one of ordinary skill in the art to which this disclosure belongs.

A photovoltaic device 1 for powering an external device is provided.

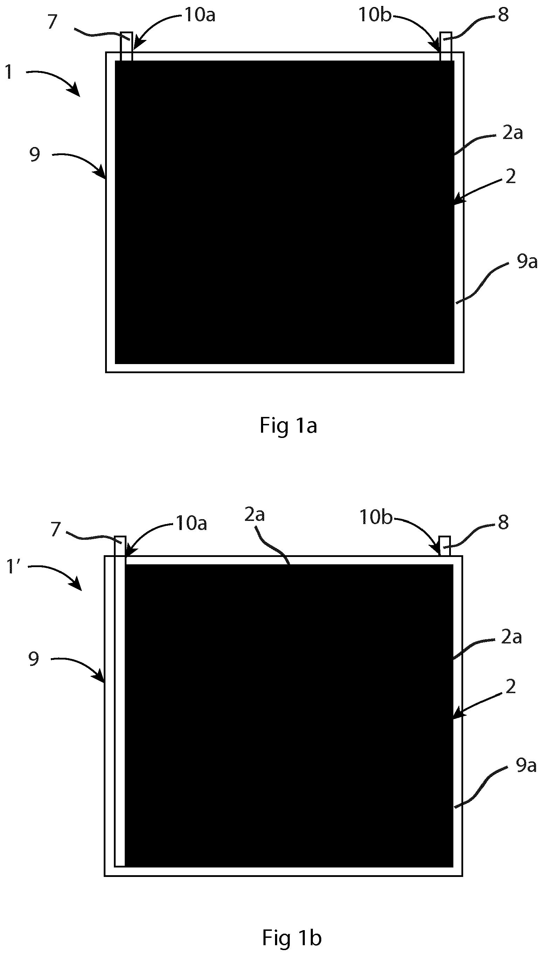

Figures 1a and 1b show views from above of the photovoltaic devices 1, 1' with a solar cell unit 2 and a first conductor 7 and a second conductor 8. In figure 1a the first conductor 7 is arranged on the bottom side of the solar cell unit 2 and in figure 1b, the first conductor 7 is arranged on the top side 2a of the solar cell unit 2. The second conductor 8 is arranged on the bottom side of the solar cell unit 2 in both figures.

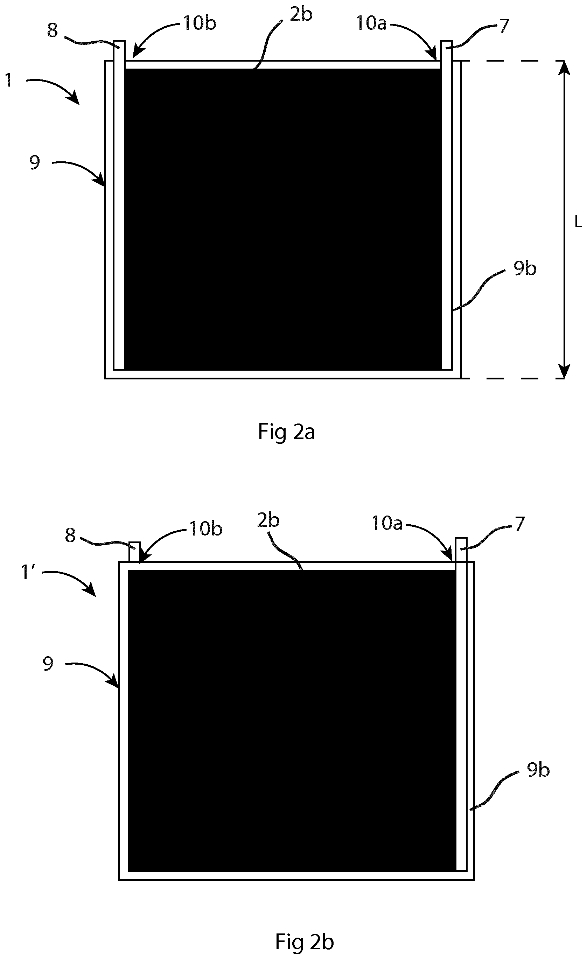

Figures 2a and 2b show the same photovoltaic devices 1, 1' as shown in figures 1a and 1b but from below. I.e. in figures 2a and 2b the bottom side 2b of the solar cell unit 2 is visible. In this view, the first conductor 7 and the second conductor 8 can be seen on the bottom side 2b.

It should be noted that in these figures, the first conductor and the second conductor are illustrated as having a length that goes all the way across the solar cell unit but it is not necessarily so as it is further explained below. Also, only one first conductor and one second conductor are illustrated but, as it is also explained below, there can be several.

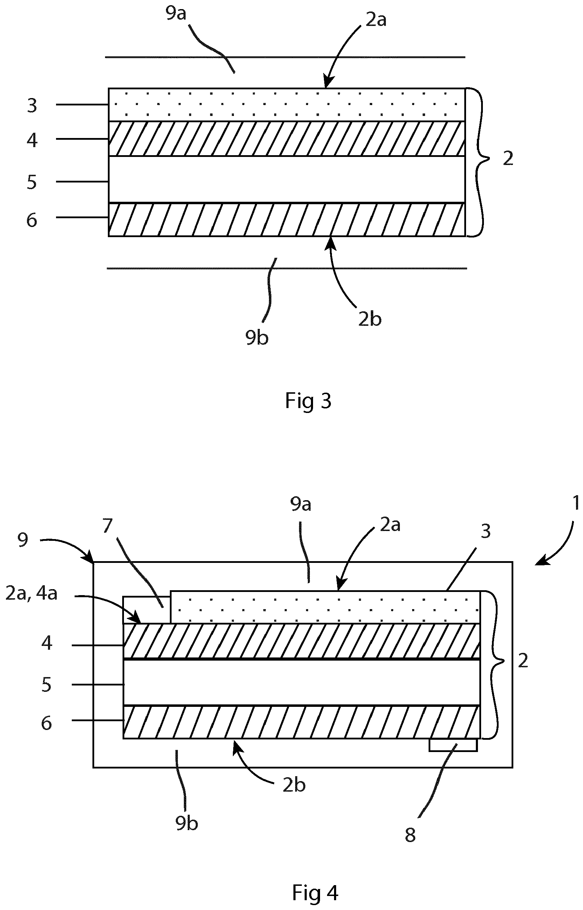

The photovoltaic device comprises a solar cell unit 2. Figure 3 shows a cross section through an example of a solar cell unit 2 without any first and second conductors, to illustrate the layers of the solar cell unit 2. The solar cell unit 2 has a working electrode comprising a porous light-absorbing layer 3 arranged at a top side 2a of the solar cell unit 2. The solar cell unit 2 also includes a porous first conducting layer 4 for extracting photo-generated electrons from the light-absorbing layer 3, wherein the light-absorbing layer 3 is arranged on top of the first conducting layer 4, a porous substrate 5 made of an insulating material, wherein the first conducting layer 4 is formed on one side of the porous substrate 5. The solar cell unit 2 has a counter electrode including a second conducting layer 6 arranged at a bottom side of the solar cell unit. The second conducting layer 6 is formed on an opposite side of the porous substrate 5. The second conducting layer 6 can be porous, but this is not necessary. In one aspect, the porous substrate is continuously extending through the entire solar cell unit. The solar cell unit 2 also includes a conducting medium for transferring charges between the second conducting layer 6 and the light-absorbing layer 3. 9a and 9b illustrate top sheet and bottom sheet of the encapsulation 9.

The first conducting layer 4 is in direct electrical contact with the light-absorbing layer 3. The porous substrate 5 provides electrical insulation between the first and second conducting layers 4, 6. In one aspect, porous substrate may comprise a first portion including a network of conducting particles accommodated in the pores of the porous substrate, and a second portion without conducting particles in order to reduce the distance between the counter electrode and the light-absorbing layer. The first and second conducting layers 4, 6 are separated physically and electrically by the porous substrate 5. The porosity of the porous substrate 5 will enable the conducting medium to pass through the substrate. For example, the thickness of the porous insulating substrate 5 is larger than 4 µm and less than 100 µm. The porosity of the first conducting layer 4, 6 will enable the conducting medium to pass through the first conducting layer.

The porous light-absorbing layer 3 is, for example, a porous TiO₂ layer deposited onto the first conducting layer 4. The TiO₂ layer comprises TiO₂ particles dyed by adsorbing dye molecules on the surface of the TiO₂ particles. The top side 2a of the solar cell unit 2 should be facing the light to allow the light to hit the dye molecules of the working electrode. According to some aspects, the light-absorbing layer is a porous TiO₂ nanoparticle layer with adsorbed organic dye. Examples of organic dyes are: N719, N907, B11, C101. Other organic dyes can also be used. However, the light absorbing layer 3 may also comprise grains of a doped semiconducting material, for example, Si, CdTe, CIGS, CIS, GaAs, or perovskite.

The conducting medium is, for example, a conventional electrolyte comprising iodide (I⁻) and triiodide (I₃⁻) ions or a similar electrolyte, or a Cu or Co complex based electrolyte. Solid state transition metal based complexes or organic polymer hole conductors are known conducting mediums. According to some aspects, the conducting medium is PEDOT.

The photovoltaic device comprises at least one first conductor 7 in electrical contact with the first conducting layer 4, at least one second conductor 8 in electrical contact with the second conducting layer 6, and an encapsulation 9 enclosing the solar cell unit. The encapsulation 9 comprises an at least partly transparent top sheet 9a covering the top side of the solar cell unit and a bottom sheet 9b covering the bottom side of the solar cell unit. The photovoltaic device further comprises that the at least one first conductor 7 is arranged between the encapsulation 9 and the solar cell unit 2 at any of the topside 2a and bottom side 2b of the solar cell unit 2, the at least one second conductor 8 is arranged between the encapsulation 9 and the solar cell unit 2 at the bottom side of the solar cell unit 2. The first conductor 7 is electrically connected to the first conducting layer 4, and the second conductor 8 is electrically connected to the second conducting layer 6.

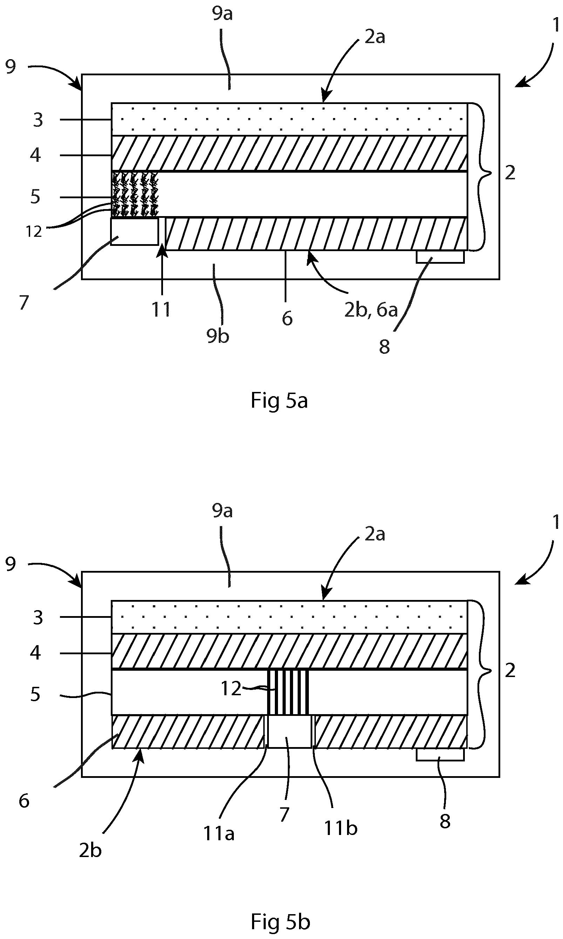

A solar cell unit according to the above can be made big and cut in any shape. The first conductor can be placed however the system designer wants; on the backside so that it is not visible from the front or along the edge on the frontside. The first conductor can be placed anywhere on the surfaces, for example, across the front surface but efficiency is then sacrificed since the solar cell unit does not produce current under the first conductor. When the first conductor 7 is placed along the edge on the topside of the solar cell unit, as shown in figure 1b, the solar cell unit has a uniform look without any grid patterns or the like. Figures 4 and 5 illustrate cross sections of example of photovoltaic devices with a first conductor 7 on the top side 2a in figure 4 and on the bottom side 2b in figures 5a-b.

According to some aspects, at least the first conducting layer 4 and the porous substrate 5 are continuously extending through the entire solar cell unit 2. The light-absorbing layer 3 and the second conducting layer 6 extend continuously at least through a main part of the solar cell unit. In one example, as shown in figure 4, a minor part of the light-absorbing layer 3 can be removed along an edge of the solar cell unit so that the first conductor 7 on a top side 2a of the solar cell unit 2 has direct electrical contact with the first conducting layer 4. In this example, the top side 2a of the solar cell unit 2 is the top side of the light-absorbing layer 3 and the top side of the first conducting layer 4 where the light-absorbing layer has been removed. In another example, as shown in figures 5a-b, a minor part of the second conducting layer 6 can be removed so that the first conductor 7 can have electrical contact with the first conducting layer 4 from a bottom side 2b of the solar cell unit 2.

The solar cell unit 2 is, according to some aspects, filled with an electrolyte for transferring charges between the second conducting layer 6 and the light-absorbing layer 3. The electrolyte comprises ions, for example comprising iodide (I⁻) and triiodide (I₃⁻) ions or copper ions (Cu⁺ and Cu2+). When the light-absorbing layer comprises TiO₂ particles, sunlight is harvested by the dye, producing photo-excited electrons that are injected into the conduction band of the TiO₂ particles and further collected by the first conducting layer 4. At the same time, ions in the electrolyte transport the electrons from the second conducting layer 6 to the light-absorbing layer 3. The first conductor 7 collects the electrons from the first conducting layer 4 and the second conductor 8 provides electrons to the second conducting layer 6 such that the solar cell unit can continuously produce power from the incoming photons. The electrolyte penetrates the pores of the light-absorbing layer 3, the first conducting layer 4, the porous substrate 5, for ions to be transferred between the second conducting layer 6 and the light-absorbing layer 3 and by that transfer electrons from the second conducting layer to the light-absorbing layer.

In an alternative embodiment, the photovoltaic device may comprise a light absorbing layer including a doped semiconducting material, and the conducting medium is a solid hole/electron conductor, such as PEDOT:PSS, in physical contact with the doped semiconducting material as shown in WO2018021952. For example, the light absorbing layer includes a plurality of grains of the doped semiconducting material, and the grains are partly covered with the conducting medium. The hole/electron conductor is electrically coupled to the second conducting layer and electrically insulated from the first conducting layer.
The encapsulation 9 comprises a top sheet 9a covering a top side 2a of the solar cell unit 2, and a bottom sheet 9b covering a bottom side 2b of the solar cell unit 2. The encapsulation 9 encloses the solar cell unit 2 and, according to some aspects, the electrolyte, and acts as liquid barriers for the electrolyte and prevents the electrolyte from leaking from the photovoltaic device 1. The top sheet 9a is transparent, or at least the part covering the active area of the solar cell unit 2 is transparent so that incoming light can pass through to the light-absorbing layer 3. The top sheet 9a on the top side 2a of the solar cell unit 2 covers the light-absorbing layer 3 and allows light to pass through. The top and bottom sheets 9a-b are, for example, made of a polymer material. According to one aspect, the encapsulation is made of a transparent plastic. This feature contributes to provide a flexible, twistable, and impact resistant photovoltaic device. The top and bottom sheets 9a-b are sealed at the edges in order to protect the solar cell unit 2 against the surrounding atmosphere, and, according to some aspects, to prevent the evaporation or leakage of the electrolyte from the inside the solar cell unit.

The counter electrode may comprise a catalytic layer. Alternatively, the second conducting layer 6 may comprise catalytic particles integrated in the second conducting layer.

For example, the first and second conducting layers 4, 6 are made of a material selected from a group consisting of titanium, titanium alloys, nickel alloys, graphite, and amorphous carbon, or mixtures thereof. Most preferably, the first and second conducting layers 4, 6 are made of titanium or a titanium alloy.

According to some aspects, the first and second conducting layers can be formed by a plurality of conducting particles bonded to each other. The conducting particles are suitably metal particles made of metal or metal alloy, for example, titanium or aluminium or an alloy thereof. The conductive particles of the first conducting layer are in physical and electrical contact with each other, and the conductive particles of the second conducting layer are in physical and electrical contact with each other.

The porous substrate is, according to some aspects, a sheet comprising woven microfibers. In another example, the porous substrate further comprises a layer of non-woven microfibers disposed on the woven microfibers. Suitably, the non-woven and woven microfibers of the porous substrate are made of glass fibres, which provides a robust and flexible substrate.

In one aspect, the first conducting layer is non-transparent and the upper surface of the solar cell unit 2 is homogeneously black, as shown in figures 1a and 1b.

As is illustrated in figures 1a, 1b, 2a and 2b the encapsulation 9 comprises a plurality of penetrations 10a, 10b arranged in connection to the first conductor 7 and the second conductor 8 for connecting the photovoltaic device 1 to the external device and by that access the power produced by the photovoltaic device. For example, the penetrations are lead trough openings in the encapsulation. Some kind of wiring will be going through the openings. For example, the first and second conductors may extend out of the encapsulation through the penetrations to connect to wiring for powering the external device. Alternatively, wires from the outside of the encapsulation are going through the penetrations and electrically connected to the first and second conductors. The penetrations are tightly fit around the wiring such that no gas or liquid can pass through them. In other words, the penetrations are sealingly closed around the wiring. The penetrations can be made by having the wires or conductors that should go through the holes in place when the encapsulation is arranged on the solar cell unit 2. The top sheet 9a and bottom sheet 9b are, for example, adhesive films that are put together over the solar cell unit 2. Alternatively, the top and bottom sheets are made of a flexible plastic material, and the edges of the top and bottom sheets are bonded to each other by melting the plastic material. If the wires/conductors are already in place between sheets before the bonding and protrude at the edges of the sheets, the penetrations 10a, 10b will be created during the bonding. Alternatively, the penetrations comprise through holes in the encapsulation made after encapsulation of the solar cell unit. The trough holes are sealed after the wires/conductors have been arranged in the through holes. The locations of the penetrations will depend on the position of the first and second conductors.

The second conducting layer 6 has, according to some aspects, a bottom surface 6a facing the bottom sheet 9b, the at least one second conductor 8 is in mechanical and electrical contact with an elongated part of the bottom surface 6a. In other words, the contacting surface between the second conductor and the bottom surface is an elongated surface which provides good electrical contact between them and which is beneficial when returning electrodes to the solar cell unit 2 since electrons can be returned over a larger area. The length of the elongated part depends on the size of the solar cell unit and how many second conductors that are used. According to some aspects, the at least one second conductor 8 extends from side to side of the second conducting layer 6 along at least 50% of the length I of the solar cell unit, preferably along at least 70% of the length I, and most preferably along at least 90% of the length I. The efficiency of the solar cell unit is increased with good contact between the second conducting layer and the second conductor. Depending on the size of the solar cell unit, one or more second conductors may be used. For a larger solar cell unit, a longer second conductor may be used. Several second conductors may also be used. The second conductor needs to provide enough electrons to the second conducting layer so that the solar cell unit is constantly refilled for producing more power.

The location of the second conducting layer can be chosen depending on size and shape of the solar cell unit. According to some aspects, the second conductor 8 extends along an edge of the bottom side 2b of the solar cell unit 2. This may be beneficial if the solar cell unit is not irregular in shape. If the shape is irregular or the solar cell unit is large, the second conductor 8 may be placed across the surface of the bottom side 2b of the solar cell unit 2.

As for the second conductor, the length and location of the first conductor can also be varied. According to some aspects, the at least one first conductor 7 extends from side to side of the solar cell unit along at least 50% of the length, preferably along at least 70% of the length, and most preferably along at least 90% of the length. The length also here, depends on the size and shape of the solar cell unit. A first conductor that covers more of the length gives, in general, a more efficient solar cell unit if it does not cover light-receiving surface but the lengths also depends on other factors, such as design and production technique.

The at least one first conductor 7 can be arranged on the top side 2a of the solar cell unit 2, as shown in figures 1b, 2b and 4. It is possible to use more than one first conductor 7 and arrange at least one of them on the top side 2a and at least one of them on the bottom side 2b. According to some aspects, the at least one first conductor 7 is arranged between the first conducting layer 4 and the top sheet 9a at the top side 2a of the solar cell unit 2, as shown in figure 4. The at least one first conductor 7 is in mechanical and electrical contact with an elongated part of the first conducting layer 4. In other words, an upper surface 4a of first conducting layer 4 comprises an elongated surface portion facing the top sheet 9a, and the at least one first conductor 7 is disposed on said elongated surface portion and is in mechanical and electrical contact with said surface portion such that the at least one first conductor extends along the elongated surface portion. The at least one first conductor is thus contacting the first conducting layer 4 at an elongated contacting area. When placing the first conductor 7 on the top side 2a of the solar cell unit 2, the first conductor can be placed in direct contact to the first conducting layer. The light-absorbing layer 3 is then not covering the whole first conducting layer 4 such that where the first conductor is located, there is no light-absorbing layer on the first conducting layer. According to some aspects, the at least one first conductor 7 comprises a first conductor extending along an edge of the upper surface 4a of the first conducting layer 4, as shown in figure 1b and figure 4. In this way, the at least one first conductor 7 is easy to arrange on the solar cell unit since it can be placed on a flat, large surface, and the solar cell unit can keep its uniform look without lines going through the top surface. The first conductor can then be covered by, for example plastic, so that it is not visible to the onlooker. Since the first conductor 7 is placed along the edge, it is easily covered without impacting the efficiency of the photovoltaic device or its overall appearance.

The at least one first conductor 7 can be arranged on the bottom side 2b of the solar cell unit 2, as shown in figures 1a, 2a, 5a, and 5b. The at least one first conductor may be arranged on the backside of the solar cell unit such that it is not at all visible from the topside, as shown in figures 1a. Thus, according to some aspects, the at least one first conductor 7 is arranged between the porous substrate 5 and the bottom sheet 9b at the bottom side 2b of the solar cell unit 2, and the at least one first conductor 7 is electrically insulated from the second conducting layer 6, and wherein the at least one first conductor 7 is in mechanical contact with an elongated part of the porous substrate 5. The at least one first conductor is electrically insulated from the second conducting layer so as to not short circuit the solar cell unit. The first conductor 7 can be arranged in electrical contact with the first conducting layer 4 in different ways. For example, a part of the porous substrate 5 disposed between the first conductor 7 and the first conducting layer 4 comprises a conducting material 12. The conducting material is, for example, a metal.

Figure 5a shows one example of how to arrange the first conductor 7 in electrical contact with the first conducting layer 4. In this example, the conducting material 12 comprise conducting particles accommodated in pores of the porous substrate and forming a conducting path through the porous substrate and between the first conductor 7 and the first conducting layer 4. This can be achieved by infiltrating the porous substrate with conducting particles between the first conductor and the first conducting layer. The size of the conducting particles is smaller than the size of the pores of the porous substrate so that the conducting particles can be accommodated in the pores of the porous substrate. The conducting particles then form a conducting network through the insulating material of the porous substrate. The conducting network is in electrical contact with the at least one first conductor and the first conducting layer 4.

Figure 5b shows another example of how to arrange the first conductor 7 in electrical contact with the first conducting layer 4. In this example, a part of the porous substrate 5 disposed between the first conductor 7 and the first conducting layer 4 comprises one or more through holes filled with a conducting material, for example, conducting particles. The holes in the substrate can, for example, be achieved by a laser or a needle. The holes can be made before applying the first conducting layer on the substrate. The holes are then filled with conducting material when the first conducting layer is applied on the substrate. In this case, the conducting material 12 is the same conducting material as is used in the second conducting layer.

According to some aspects, the conducting material 12 is the same material as is used in the second conducting layer. The conducting material 12 can be made of metal, metal alloy, or other conducting materials, for example, titanium, titanium alloys, nickel, nickel alloys, carbon based materials, conducting oxides, conducting nitrides, conducting carbides, conducting silicides, or mixtures thereof. For example, the conducting particles are made from a material selected from a group consisting of titanium, titanium alloys, nickel, nickel alloys, carbon based materials such as graphene or graphite or carbon black or carbon nanotubes, conducting oxides, conducting nitrides, conducting carbides, conducting silicides or mixtures thereof.

When the at least one first conductor 7 is arranged on the bottom side 2b, the at least one first conductor 7 is electrically insulated from the second conducting layer. According to some aspects, the second conducting layer 6 ends at a distance from the first conductor 7 so that one or more insulating gap 11 is formed between the first conductor 7 and the second conducting layer 6, as shown in figures 5a and 5b. In other words, the second conducting layer 6 does not cover the entire porous substrate, and in the places where there is no second conducting layer 6 on the porous substrate 5, there is arranged at least one first conductor 7 with a distance between the second conducting layer 6 and the first conductor 7. In other words, the at least one first conductor 7 does not cover the entire porous substrate 5 at the location where the second conducting layer 6 does not cover the porous substrate. The insulating gap 11 may be filled with an insulating material to increase the insulating properties of the insulating gap.

The first conductor can be arranged along an edge of the porous substrate, as shown in figure 5a, or along the surface of the porous substrate at any position, for example, as shown in figure 5b. If the first conductor is arranged along an edge of the porous substrate, there is one insulating gap 11 between first conductor 7 and the second conducting layer 6, otherwise there are two insulating gaps 11a-b, as shown in figure 5b.

According to some aspects, the first and second conducting layers 4, 6 comprise titanium or an alloy thereof. Although titanium has relatively low electrical conductivity for a metal, it is advantageous to use titanium in the first and second conducting layers since it is non-corrosive and can resist high temperatures in air without oxidizing significantly, which is advantageous during manufacturing of the solar cell unit. According to an aspect, the second conductor 8 is made of titanium or an alloy thereof. According to another aspect, the first conductor 7 is made of titanium or an alloy thereof. This is advantageous when the first and second conductor are arranged in physical contact with the first and second conducting layers to provide a good electrical connection between the conductors and the conducing layers. Due to the high temperatures during manufacturing of the solar cell unit there is a thin oxide layer on the titanium or titanium alloy of the second conducting layer. It has been found that it is difficult to provide electrical contact between a conductor of a traditional conducting metal, such as copper or silver, and the first and second conducting layers due to the oxide layer on the titanium. Surprisingly, it has been discovered that a conductor comprising titanium provides good electrical connection with the conducing layers of the solar cell unit despite the oxide layer on the titanium. Thus, it is advantageous to use titanium as conducting material in the first and second conductor, even though titanium has relatively low electrical conductivity. According to some aspects, the second conductor comprise an elongated conducting foil. According to some aspects, the first conductor comprises an elongated conducting foil. A foil provides a wide contacting area, which is advantageous when the conductor is made of a material with relatively low electrical conductivity, such as titan or an alloy thereof. According to some aspects, the conducting foil has a width of at least 3 mm. This is advantageous when the conductor is made of a material with relatively low electrical conductivity, such as titan or an alloy thereof. The width is both for large contacting area, for increased flow of electrons and for easiness to handle. A thinner foil is harder to handle in the production process. One option for the foil is using a wire.

Alternatively, the first conductor 7 and second conductor 8 comprise an elongated wire. A wire may be a cheap and durable option. A wire is thinner than a foil and can be used on the front side of the solar cell unit, without disturbing the appearance of the photovoltaic device. According to one aspect, the wire has an elongated kernel of a material with high electrical conductivity, for example of metal, such as silver, and the kernel has a cover of titanium or an alloy thereof. Such a wire will provide good electrical connection to conducting layers comprising titanium as well as high electrical conductivity.

The solar cell unit 2 can be produced in any size or shape. The limit for the size mainly comes from easiness to handle the solar cell unit. Since the first conductors can be arranged such that there are no visible first conductors extending across the top surface of the solar cell unit, the surface of the top side of the solar cell unit becomes visually homogenous. There are no visible first conductors across the top surface of the solar cell when the first conductor is arranged along the edge of the top side of the solar cell unit or at the bottom side. This means that the appearance of the upper side of the device is uniform, and not interrupted by any first conductors or has any changes in color. This makes it possible to integrate the photovoltaic device in electronic devices without impairing the visible appearance of the electronic device. A user may even not notice the photovoltaic device.

With active area meaning the area of the solar cell unit, which contributes to produce power when it is exposed to light. The size of the solar cell, i.e. the length and width of the solar cell unit may vary depending on which external device it is adapted to power. Accordingly, the active area of the solar cell unit may vary depending on the need of power. For example, the size of the solar cell unit may vary between 1x1 cm with an active area of 1 cm² and 1x1 m with an active area of 1 m².

There are several possible variations to the solar cell unit 2 and in how to produce it. In addition to the details disclosed here, published patent application WO2013149787 (A1) and WO2014184379 (A1) and as well as unpublished EP application EP17209762.8 describe how to produce the solar cell unit 2. Accordingly, the three documents are herein disclosed by reference.

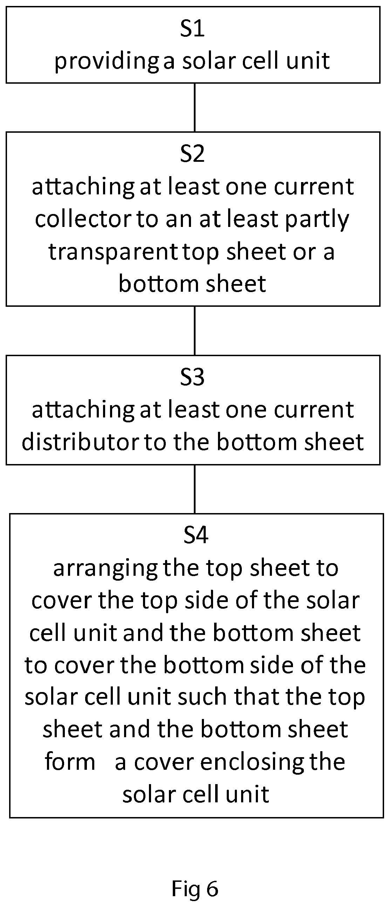

The photovoltaic device 1 of the present disclosure thus has a solar cell unit provided according to a method disclosed in any of the above referenced documents. According to an embodiment of the invention, a method for producing a photovoltaic device 1 for powering an external device is provided. A block diagram of the method is illustrated in figure 6.

The method comprises providing a solar cell unit 2 including a working electrode comprising a porous light-absorbing layer 3 arranged at a top side 2a of the solar cell unit, a porous first conducting layer 4 for extracting photo-generated electrons from the light-absorbing layer 3, wherein the light-absorbing layer 3 is arranged on top of the first conducting layer 4, a porous substrate 5 made of an insulating material, wherein the first conducting layer 4 is formed on one side of the porous substrate 5, a counter electrode including a second conducting layer 6 arranged at a bottom side of the solar cell unit, wherein the second conducting layer 6 is formed on an opposite side of the porous substrate 5, and a conducting medium for transferring charges between the second conducting layer 6 and the light-absorbing layer 3. Hence, these steps, and variations thereof, are discussed in the above referenced documents.

The method further comprises attaching at least one first conductor 7 to an at least partly transparent top sheet 9a or a bottom sheet 9b, attaching at least one second conductor 8 to the bottom sheet 9b and arranging the top sheet 9a to cover the top side of the solar cell unit 2 and the bottom sheet 9b to cover the bottom side of the solar cell unit such that the top sheet 9a and the bottom sheet 9b form an encapsulation 9 enclosing the solar cell unit 2. The at least one first conductor 7 is attached to the top sheet 9a or the bottom sheet 9b such that it is in electrical contact with the first conducting layer 4 when the encapsulation 9 is formed and wherein the at least one second conductor 8 is attached to the bottom sheet 9b such that it is in electrical contact with the second conducting layer 6 when the encapsulation 9 is formed. Thus, the photovoltaic device described above is produced. The method provides a way to produce the device where there is no need for any adhesive material between the first conductors and the conducting layers. It is also easy to handle the thin first conductors when they are attached to the encapsulation sheets 9a and 9b. In other words, when producing the photovoltaic device, the solar cell unit is provided and when the first conductor and second conductor are to be arranged on the solar cell unit, they are first put on the corresponding location on the top sheet 9a and bottom sheet 9b such that when the top sheet 9a and the bottom sheet 9b are arranged on the solar cell unit, the first conductor and the second conductor are collocated to their positions on the solar cell unit.

The present invention is not limited to the embodiments disclosed but may be varied and modified within the scope of the following claims. For example, the photovoltaic device may comprise more than one second conductor arranged between the encapsulation and the solar cell unit. The photovoltaic device may also comprise more than one first conductor arranged between the encapsulation and the solar cell unit. The number of penetrations can vary. There is at least one penetration for each of the first and second conductor. However, it is also possible to have a plurality of penetrations for each of the first and second conductors.

Reference list
1. Photovoltaic device
2. Solar cell unit
   a. Top side
   b. Bottom side
3. Light-absorbing layer
4. First conducting layer
   a. Upper surface
5. Porous substrate
6. Second conducting layer
   a. Bottom surface
7. First conductor
8. Second conductor
9. Encapsulation
   a. Top sheet
   b. Bottom sheet
10. Opening
   a. First opening
   b. Second opening
11. Gap
12. Conducting material

## Claims

1. A photovoltaic device (1;1') for powering an external device, comprising:
• a solar cell unit (2) including:
- a working electrode comprising a porous light-absorbing layer (3) arranged at a top side (2a) of the solar cell unit,
- a first conducting layer (4) for extracting photo-generated electrons from the light-absorbing layer (3), wherein the light-absorbing layer (3) is arranged on top of the first conducting layer (4),
- a porous substrate (5) made of an insulating material, wherein the first conducting layer (4) is formed on one side of the porous substrate (5),
- a counter electrode including a second conducting layer (6) arranged at a bottom side (2b) of the solar cell unit, wherein the second conducting layer (6) is formed on an opposite side of the porous substrate (5), and
- a conducting medium for transferring charges between the second conducting layer (6) and the light-absorbing layer (3),
• a first conductor (7) in electrical contact with the first conducting layer (4),
• a second conductor (8) in electrical contact with the second conducting layer (6), and
• an encapsulation (9) encapsulating the solar cell unit, and comprising an at least partly transparent top sheet (9a) covering the top side (2a) of the solar cell unit and a bottom sheet (9b) covering the bottom side (2b) of the solar cell unit,
wherein the first conductor (7) is arranged between the encapsulation (9) and the solar cell unit (2) at any of the top side (2a) and bottom side (2b) of the solar cell unit (2), and the second conductor (8) is arranged between the encapsulation (9) and the solar cell unit (2) at the bottom side (2b) of the solar cell unit (2).

2. The photovoltaic device according to claim 1, wherein the first and second conductors (7, 8) are elongated and arranged with their longitudinal axes in parallel with the first and second conducting layers.

3. The photovoltaic device according to claim 1 or 2, wherein each of the second conductor (8) and the first conductor (7) extend from side to side of the solar cell unit along at least 50% of the length (I), preferably along at least 70% of the length (I), and most preferably along at least 90% of the length (I).

4. The photovoltaic device according to any preceding claims, wherein the second conducting layer (6) has a bottom surface (6a) facing the bottom sheet (9b), the second conductor (8) is in mechanical and electrical contact with an elongated part of the bottom surface (6a).

5. The photovoltaic device according to any preceding claim, wherein the second conducting layers (6) comprises titanium or an alloy thereof, and the second conductor (8) comprises titanium or an alloy thereof.

6. The photovoltaic device according to any preceding claim, wherein the second conductor (7) comprise an elongated conducting foil.

7. The photovoltaic device according to claim 6, wherein the conducting foil has a width of at least 3 mm.

8. The photovoltaic device according to any preceding claims, wherein the first conductor (7) is arranged between the first conducting layer (4) and the top sheet (9a) at the top side (2a) of the solar cell unit (2), the first conductor (7) extends along an edge of an upper surface 4a of the first conducting layer (4), and is in mechanical and electrical contact with an elongated part of the first conducting layer (4).

9. The photovoltaic device according to any preceding claims, wherein the first conductor (7) is arranged between the porous substrate (5) and the bottom sheet (9b) at the bottom side (2b) of the solar cell unit (2), the first conductor (7) is electrically insulated from the second conducting layer (6), and the first conductor (7) is in mechanical contact with an elongated part of the porous substrate (5).

10. The photovoltaic device according to claim 9, wherein the second conducting layer (6) ends at a distance from the first conductor (7) so that an insulating gap (11) is formed between the first conductor (7) and the second conducting layer (6).

11. The photovoltaic device according to claim 9 or 10, wherein the porous substrate (5) comprises conducting material (12) disposed between the first conductor (7) and the first conducting layer (4) to provide electrical contact between the first conductor and the first conducting layer.

12. The photovoltaic device according to claim 11, wherein the conducting material (12) comprises conducting particles.

13. The photovoltaic device according to any preceding claims, wherein each of the second conductor (8) and the first conductor (7) extend from side to side of the solar cell unit along at least 50% of the length (I), preferably along at least 70% of the length (I), and most preferably along at least 90% of the length (I).

14. The photovoltaic device according to any preceding claims, wherein the encapsulation (9) comprises a plurality of penetrations (10a, 10b) in connection to the first and second conductors (7,8) to provide access to the power produced by the photovoltaic device.

15. A method for producing a photovoltaic device (1) for powering an external device, the method comprising:
• providing (S1) a solar cell unit (2) including:
- a working electrode comprising a porous light-absorbing layer (3) arranged at a top side (2a) of the solar cell unit,
- a porous first conducting layer (4) for extracting photo-generated electrons from the light-absorbing layer (3), wherein the light-absorbing layer (3) is arranged on top of the first conducting layer (4),
- a porous substrate (5) made of an insulating material, wherein the first conducting layer (4) is formed on one side of the porous substrate (5),
- a counter electrode including a second conducting layer (6) arranged at a bottom side of the solar cell unit, wherein the second conducting layer (6) is formed on an opposite side of the porous substrate (5), and
- a conducting medium for transferring charges between the second conducting layer (6) and the light-absorbing layer (3),
• attaching (S2) at least one first conductor (7) to an at least partly transparent top sheet (9a) or a bottom sheet (9b),
• attaching (S3) at least one second conductor (8) to the bottom sheet (9b),
• arranging (S4) the top sheet (9a) to cover the top side of the solar cell unit (2) and the bottom sheet (9b) to cover the bottom side of the solar cell unit such that the top sheet (9a) and the bottom sheet (9b) form an encapsulation (9) enclosing the solar cell unit (2),
wherein the at least one first conductor (7) is attached to the top sheet (9a) or the bottom sheet (9b) such that it is in electrical contact with the first conducting layer (4) when the encapsulation (9) is formed and wherein the at least one second conductor (8) is attached to the bottom sheet (9b) such that it is in electrical contact with the second conducting layer (6) when the encapsulation (9) is formed.
